# EUROPÄISCHE PATENTANMELDUNG

(11) **EP 1 009 158 A1**
(43) Veröffentlichungstag der Anmeldung: **14.06.2000**
(21) Anmeldenummer: 98123045.1
(22) Anmeldetag: 08.12.1998
(51) Int. Cl.: H04N 1/06

(54) **Trommelaufzeichnungsvorrichtung**

(71) Anmelder: GRETAG IMAGING AG, CH-8105 Regensdorf (CH)
(72) Erfinder: Keller, Guido, 8106 Adlikon (CH); Landolt, Markus, 8057 Zürich (CH)
(74) Vertreter: Schwabe - Sandmair - Marx

(57) **Zusammenfassung**

Eine Trommelbildaufzeichnungsvorrichtung umfasst eine drehbar angetriebene Spanntrommel (100), Mittel (160) zum Befestigen eines Aufzeichnungsmediums (M) auf dem Mantel (110) der Spanntrommel und eine bezüglich der Drehrichtung der Spanntrommel feststehende Aufzeichnungseinheit (200), welche ihr in Form von elektrischen Signalen zugeführte Bildinformation auf das auf dem Mantel der rotierenden Spanntrommel (100) befestigte Aufzeichnungsmedium (M) aufzeichnet. Im Inneren der Spanntrommel (100) sind Halterungsmittel (120) für einen zu einer Rolle (130) aufgewickelten Vorrat an Aufzeichnungsmedium (M) vorgesehen. Die Spanntrommel (100) weist in ihrem Mantel (110) einen Schlitz (140) auf, durch den das Aufzeichnungsmedium (M) vom Inneren der Spanntrommel (100) auf deren Mantel (110) geführt und dort befestigt werden kann.

Die Zuführung des Aufzeichnungsmediums vom Inneren der Spanntrommel ist einerseits konstruktiv besonders einfach und vorteilhaft und ermöglicht es anderseits, das Aufzeichnungsmedium erst nach der Aufzeichnung der Bildinformation auf die jeweils erforderliche genaue Länge abzuschneiden, ohne dass Verschnitt entsteht. Das Bildformat kann dabei innerhalb der zur Verfügung stehenden Länge des Spanntrommelumfangs beliebig variiert werden, was einen sehr flexiblen und ökonomischen Betrieb der Aufzeichnungsvorrichtung erlaubt.

## Beschreibung

Die Erfindung betrifft eine Vorrichtung zum Aufzeichnen von Bildinformation auf ein flächiges Aufzeichnungsmedium gemäss dem Oberbegriff des unabhängigen Anspruchs. Im speziellen betrifft die Erfindung eine Vorrichtung zur drucktechnischen Erzeugung von Bildern oder zum Aufbelichten von Bildinformation auf fotografisches Aufzeichnungsmaterial.

Trommelaufzeichnungsvorrichtungen umfassen im allgemeinen eine rotierende Spanntrommel für das Aufzeichnungsmedium und eine bezüglich der Drehbewegung der Spanntrommel feststehende Aufzeichnungseinheit, welche aus einem oder mehreren achsparallel verschiebbaren Aufzeichnungsköpfen oder einem oder mehreren Aufzeichnungskopffeldern, die sich im wesentlichen parallel zur Rotationsachse der Spanntrommel erstrecken, besteht. Die Aufzeichnung der Bildinformation erfolgt punktweise, wobei durch die Rotation der Spanntrommel einerseits und die Verschiebung der Aufzeichnungsköpfe parallel zur Spanntrommelachse bzw. die sich über die Breite der Spanntrommel erstreckenden Aufzeichnungskopffelder anderseits die gesamte Fläche des auf der Spanntrommel befestigten Aufzeichnungsmaterials überstrichen wird. Trommelaufzeichnungsvorrichtungen dieser Art werden z.B. für fotografische Aufzeichnungsverfahren mittels z.B. Leuchtdiodenbelichtung von fotoempfindlichem Kopiermaterial oder Film und für elektrostatische Druckverfahren sowie auch für Tintenstrahl-(Ink Jet-) Druckverfahren eingesetzt.

Bei den bisher bekannten Trommelaufzeichnungsvorrichtungen dieser Art wird das Aufzeichnungsmedium - je nach Technologie dem Verwendungszweck angepasstes Papier oder fotografisches Kopiermaterial - manuell oder automatisch von aussen der Spanntrommel zugeführt und an deren Manteloberfläche geeignet fixiert. Dabei muss das Aufzeichnungsmedium immer vorher auf die dem Trommelumfang entsprechende Länge zugeschnitten werden. Stimmt die Länge des aufgespannten Aufzeichnungsmaterialabschnitts nicht mit der in Umfangsrichtung der Spanntrommel gemessenen Länge des aufzuzeichnenden Bilds bzw. der Gesamtlänge der aufzuzeichnenden Bilder überein, entsteht Verschnitt und somit Abfall.

Durch die vorliegende Erfindung soll nun dieser Nachteil beseitigt und entsprechend eine Trommelaufzeichnungsvorrichtung der gattungsgemässen Art dahingehend verbessert werden, dass verschnittbedingter Abfall vermieden werden kann. Ausserdem soll die automatische Zuführung des Aufzeichnungsmediums auf die Spanntrommel vereinfacht werden.

Die Lösung dieser der Erfindung zugrundeliegenden Aufgabe ergibt sich aus den im kennzeichnenden Teil des unabhängigen Anspruchs beschriebenen Merkmalen. Besonders vorteilhafte Ausgestaltungen und Weiterbildungen sind Gegenstand der abhängigen Ansprüche.

Gemäss dem Grundgedanken der Erfindung wird also das Aufzeichnungsmedium vom Inneren der Spanntrommel her auf deren Mantel zugeführt und dort befestigt. Dies ist einerseits konstruktiv besonders einfach und vorteilhaft und ermöglicht es anderseits, das Aufzeichnungsmedium erst nach der Aufzeichnung der Bildinformation auf die jeweils erforderliche genaue Länge abzuschneiden, ohne dass Verschnitt entsteht. Das Bildformat kann dabei innerhalb der zur Verfügung stehenden Länge des Spanntrommelumfangs beliebig variiert werden, was einen sehr flexiblen und ökonomischen Betrieb der Aufzeichnungsvorrichtung erlaubt. Selbstverständlich können dabei in einem Durchgang auch mehrere Bilder aufgezeichnet werden, sofern deren Gesamtlänge den Umfang der Spanntrommel nicht übersteigt. Die körperliche Auftrennung der aufgezeichneten Bilder in Einzelbilder kann dabei (nach abgeschlossener Aufzeichnung) noch auf der Spanntrommel selbst oder in einem separaten Arbeitsgang erfolgen.

Die erfindungsgemässe Aufzeichnungsvorrichtung eignet sich besonders zum Einsatz in fotografischen Printern, auch Minilabs, und in Hochleistungstintenstrahldruckern.

Im folgenden wird die Erfindung anhand der Zeichnung näher erläutert. Es zeigen:
- Fig.1: eine schematische Gesamtdarstellung der erfindungsrelevanten Teile eines ersten Ausführungsbeispiels der erfindungsgemässen Trommelaufzeichnungsvorrichtung,
- Fig. 2-5: je einen Detailausschnitt in vier charakteristischen Funktionsphasen der Aufzeichnungsvorrichtung der Fig.1,
- Fig. 6-7: je eine schematische Übersichtsdarstellung eines zweiten Ausführungsbeispiels in zwei um 180° gegenseitig verdrehten Ansichten und
- Fig. 8-12: je eine schematische Schnittdarstellung der Aufzeichnungsvorrichtung der Fig.6 in fünf charakteristischen Funktionsphasen.

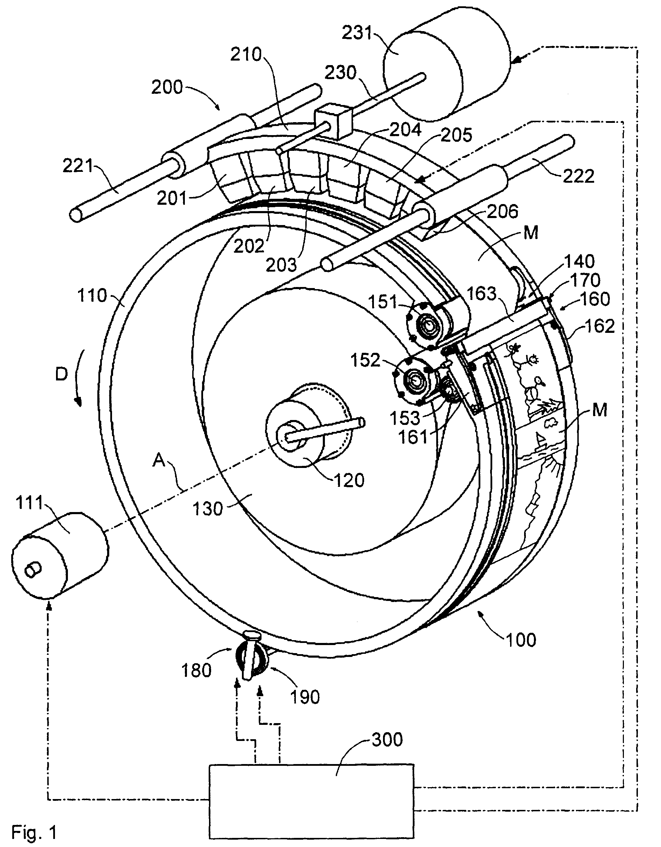

Wie aus der Gesamtdarstellung der Fig. 1 hervorgeht, umfasst die Aufzeichnungsvorrichtung eine als Ganzes mit 100 bezeichnete Spanntrommel und eine gesamthaft mit 200 bezeichnete Aufzeichnungseinheit sowie eine elektronische Steuerung 300, welche alle Bewegungsabläufe und Funktionen der Vorrichtung steuert.

Die Spanntrommel 100 besitzt einen zylindrischen Mantel 110 und ist mittels eines von der Steuerung 300 angesteuerten Antriebsmotors 111 um ihre Achse A in Richtung des Pfeils D drehbar angetrieben.

Die über der Spanntrommel 100, relativ zur Drehbewegung der Spanntrommel ortsfest in einem nicht gezeigten Rahmen angeordnete Aufzeichnungseinheit 200 umfasst im vorliegenden Ausführungsbeispiel sechs in Drehrichtung hintereinander liegende Aufzeichnungsköpfe 201-206, welche auf einem gemeinsamen Träger 210 montiert sind. Der Träger 210 ist auf zwei Gleitstangen 221 und 222 verschiebbar gelagert und mittels einer durch einen Spindelmotor 231 angetriebenen Spindel 230 linear bewegbar. Auf diese Weise können also die Aufzeichnungsköpfe 201-206, kontrolliert durch die Steuerung 300, gemeinsam in Richtung parallel zur Rotationsachse A der Spanntrommel 100 vor- und rückwärts verstellt werden.

Die Aufzeichnungsköpfe 201-206 können je nach Einsatzzweck der Vorrichtung verschieden ausgebildet sein. Es kann sich z.B. um Tintenstrahl-Druckköpfe oder um Punktlichtquellen für fotografische Aufbelichtung handeln. Insbesondere in letzterem Fall können anstatt der querverschiebbaren Aufzeichnungsköpfe auch ein oder mehrere zeilenförmige Anordnungen (Felder) von Aufzeichnungsköpfen vorgesehen sein, welche sich parallel zur Rotationsachse A der Spanntrommel erstrecken und deren gesamte aktive Breite überdecken. Solche zeilenförmigen Anordnungen von Aufzeichnungsköpfen können typischerweise durch Leuchtdiodenzeilen gebildet sein. Aufzeichnungsköpfe bzw. Anordnungen von Aufzeichnungsköpfen für verschiedene Aufzeichnungstechnologien sind an sich bekannt und bedürfen daher für den Fachmann keiner näheren Erläuterung.

Im Inneren der Spanntrommel 100 befindet sich ein koaxialer Spanndom 120, auf dem eine Vorratsrolle 130 von Aufzeichnungsmedium M, beispielsweise etwa Druckpapier geeigneter Qualität, gehaltert ist. Im Mantel 110 der Spanntrommel 100 ist ein Schlitz 140 vorgesehen, welcher das Innere der Spanntrommel 100 mit deren Aussenraum verbindet. An der in Rotationsrichtung der Spanntrommel vorderen Seite des Schlitzes 140 ist eine Umlenkwalze 151 versenkt angeordnet, so dass sie bündig mit der Oberfläche des Mantels 110 abschliesst. Unterhalb des Schlitzes 140 befindet sich, etwas entgegen der Drehrichtung versetzt, ein Klemmrollenpaar 152 und 153. An der in Rotationsrichtung der Spanntrommel hinteren Seite des Schlitzes 140 ist am Mantel 110 eine Klemmeinrichtung 160 angebracht, welche zum Festspannen des Aufzeichnungsmediums M auf dem Mantel 110 der Spanntrommel 100 dient. Die Klemmeinrichtung 160 umfasst zwei beidseits des Mantels 110 angelenkte Tragschenkel 161 und 162 und einen diese verbindenden Klemmbalken 163, der sich quer über die Breite der Spanntrommel 100 bzw. deren Mantels 110 erstreckt. Ebenfalls an den beiden Tragschenkeln 161 und 162 befestigt ist eine Schneideinrichtung in Form eines sich quer über den Mantel 110 erstreckenden Messerbalkens 170, welcher mit dem Klemmbalken 163 zusammen bewegbar ist. Der Klemmbalken 163 wird normalerweise von nicht gezeigten Federn gegen die Oberfläche des Mantels 110 gepresst und klemmt so das unter ihm befindliche Aufzeichnungsmedium M auf dem Mantel 110 der Spanntrommel 100 fest.

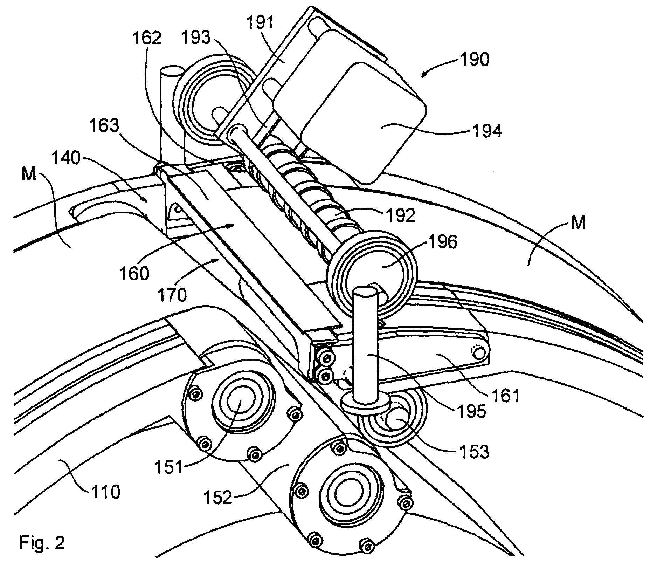

Beispielsweise der Aufzeichnungseinheit 200 gegenüberliegend ist ortsfest in einem nicht gezeigten Rahmen eine Betätigungseinrichtung 180 vorgesehen, welche von der Steuerung 300 gesteuert die Klemmeinrichtung 160 und die Schneideinrichtung 170 betätigt, wenn sich die Spanntrommel 100 in einer definierten Drehstellung befindet, in welcher die Betätigungseinrichtung 180 der Klemmeinrichtung 160 gegenüberliegt und mit dieser in Eingriff gebracht werden kann. An derselben Stelle ist ebenfalls ortsfest in einem nicht gezeigten Rahmen eine Antriebseinrichtung 190 vorgesehen, welche in der genannten Drehstellung der Spanntrommel 100 gesteuert von der Steuerung 300 in Eingriff mit dem auf dem Mantel 110 befindlichen Aufzeichnungsmedium M gebracht werden kann und dazu dient, das Aufzeichnungsmedium M in noch zu beschreibender Weise in Drehrichtung der Spanntrommel 100 relativ zu deren Mantel 110 vorzuschieben. In Fig. 1 sind die Betätigungseinrichtung 180 und die Antriebseinrichtung 190 nur symbolisch angedeutet, Einzelheiten gehen aus den Figuren 2-5 hervor.

Wie die Detaildarstellung der Fig. 2 zeigt, umfasst die Antriebseinrichtung 190 im wesentlichen eine in einem Schwenkrahmen 191 drehbar gelagerte Antriebswalze 192, welche über einen Riemen 193 von einem mit der Steuerung 300 verbundenen Motor 194 angetrieben ist. Der Schwenkrahmen 191 ist in einem nicht dargestellten Rahmen ortsfest gelagert und kann über einen nur symbolisch angedeuteten Excentermechanismus 195-196 auf den Mantel 110 zu bewegt bzw. von diesem wegbewegt werden, wobei die Antriebswalze 192 mit dem auf dem Mantel liegenden Aufzeichnungsmedium M in Eingriff kommt bzw. von diesem abgehoben wird. Mittels desselben Excentermechanismus' 195-196 wird auch die Klemmeinrichtung 160 und die mit ihr verbundene Schneideinrichtung 170 betätigt. Der Excentermechanismus 195-196 ist von einem nicht dargestellten ortsfesten Motor angetrieben, der seinerseits mit der Steuerung 300 verbunden ist und von dieser gesteuert wird.

Die Funktionsweise der Aufzeichnungsvorrichtung ist wie folgt:

Nachdem eine Vorratsrolle 130 von Aufzeichnungsmedium M auf dem Spanndorn 120 im Inneren der Spanntrommel 100 befestigt ist, wird der Anfang des bahnförmigen Aufzeichnungsmediums M zwischen den Klemmrollenpaar 152-153 durch den Schlitz 140 nach aussen geführt, um den Mantel 110 der Spanntrommel 100 herum geführt und mittels der Klemmeinrichtung 160 festgelegt. Die Antriebseinrichtung 190 befindet sich in ihrer inaktiven Stellung, bei welcher die Antriebswalze 192 vom Mantel 110 abgehoben ist. Damit ist das Aufzeichnungsmedium M auf der Spanntrommel 100 festgelegt und die Vorrichtung für den Aufzeichnungsvorgang bereit (Fig.2).

Nun wird die Spanntrommel 100 mitsamt dem Aufzeichnungsmedium M in Rotation in Richtung des Pfeils D versetzt und die aufzuzeichnende Bildinformation wird mittels der Aufzeichnungseinheit 200 auf den auf dem Mantel 110 befindlichen Abschnitt des Aufzeichnungsmediums M oder einen Teil desselben in an sich bekannter Weise aufgezeichnet. Wenn der Aufzeichnungsvorgang beendet ist, wird die Spanntrommel 100 in der vorstehend erwähnten definierten Drehstellung (Parkposition) angehalten.

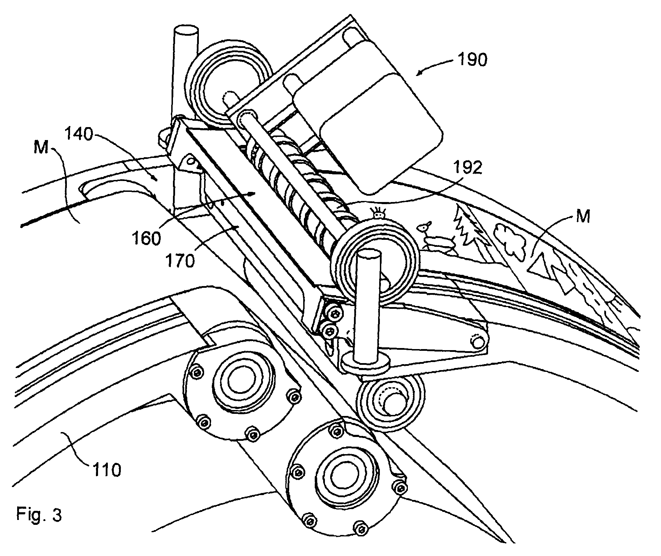

Nun wird, wie in Fig.3 dargestellt, die Antriebseinrichtung 190 auf den Mantel 110 abgesenkt, so dass die Antriebswalze 192 mit dem auf dem Mantel befindlichen Aufzeichnungsmedium M in Eingriff kommt. Gleichzeitig oder unmittelbar danach wird die Klemmeinrichtung 160 zusammen mit dem Messerbalken 170 vom Mantel 110 abgehoben, so dass das Aufzeichnungsmedium M an dieser Stelle nur noch von der Antriebswalze 192 auf dem Mantel 110 festgehalten wird.

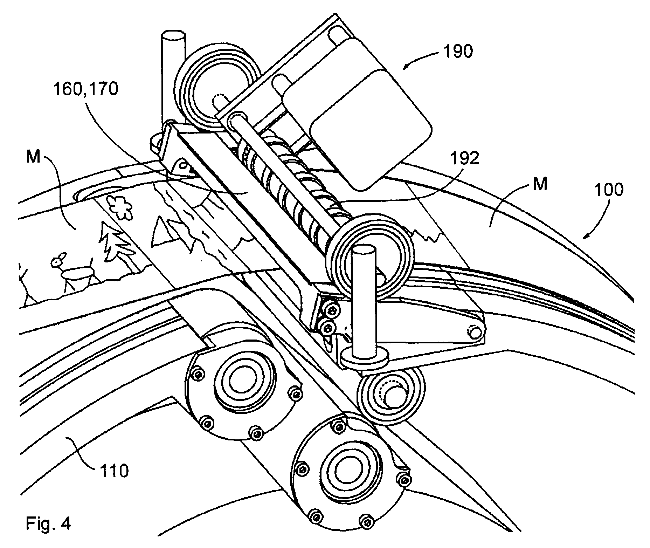

Jetzt wird der beschriebene (bildtragende) Abschnitt des Aufzeichnungsmediums M ausgestossen (Fig.4). Dazu wird die Antriebswalze 192 in Bewegung gesetzt und damit die Aufzeichnungsmediumbahn M in Drehrichtung der Spanntrommel 100 unter dem Messerbalken 170 durch so weit nach vorne geschoben, bis sich das hintere Ende des beschriebenen Abschnitts unter dem Messerbalken 170 befindet.

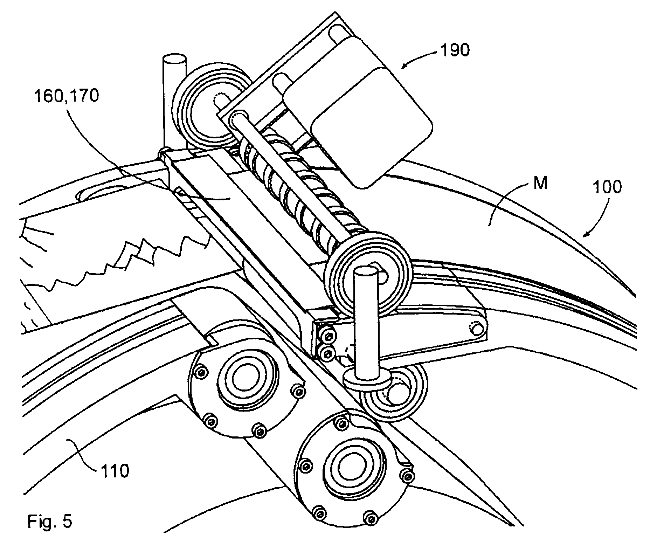

Danach wird die Klemmeinrichtung 160 zusammen mit dem mit ihr verbundnen Messerbalken 170 wieder gegen den Mantel 110 gepresst und gleichzeitig oder unmittelbar darauf die Antriebseinrichtung 190 wieder vom Mantel 110 abgehoben. Durch die Abwärtsbewegung (bezogen auf die Trommel radial einwärts) der Klemmeinrichtung 160 und des Messerbalkens 170 wird der beschriebene Abschnitt des Mediums abgeschnitten und der neue Anfang des noch unbeschriebenen Mediums auf der Spanntrommel festgeklemmt. Nun steht die Vorrichtung für den nächsten Aufzeichnungsvorgang bereit (Fig.5).

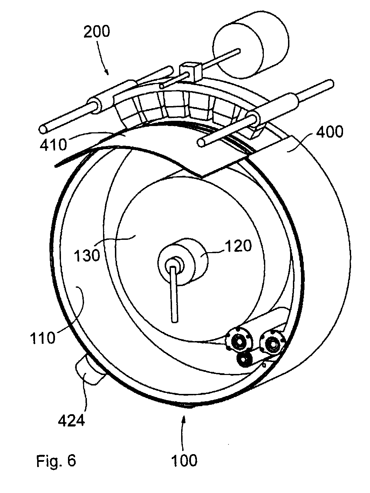

Die Figuren 6-12 zeigen ein zweites Ausführungsbeispiel der Aufzeichnungsvorrichtung, bei dem die Spanntrommel während der gesamten Aufzeichnungsdauer mit konstanter Geschwindigkeit rotiert. Dies hat den Vorteil, dass die sonst durch das Abbremsen und Beschleunigen der Spanntrommel resultierenden Totzeiten entfallen. Die Spanntrommel braucht lediglich zum erstmaligen Laden und zum Nachladen von Aufzeichnungsmedium angehalten zu werden.

In ihrem grundsätzlichen Aufbau entspricht die Aufzeichnungsvorrichtung der Figuren 6-12 derjenigen der Figuren 1-5. Gleiche bzw. entsprechende Teile sind daher mit gleichen Bezugszeichen versehen. Der wesentliche Unterschied besteht darin, dass bei diesem Ausführungsbeispiel die Klemmeinrichtung 160 durch eine Saugeinrichtung 460 ersetzt ist und die an der Spanntrommel angeordnete Schneideinrichtung 170 sowie die feststehende Betätigungseinrichtung 180 und die feststehende Antriebseinrichtung 190 entfallen. Ein weiterer wesentlicher Unterschied besteht in einem feststehenden zylindrischen Führungsmantel 400, welcher die Spanntrommel 100 bzw. deren Mantel 110 koaxial umschliesst und so zwischen sich und dem Mantel 110 einen Führungskanal für das Aufzeichnungsmedium M bildet.

Die Saugeinrichtung 460 ist an sich konventionell aufgebaut und ist an eine nicht dargestellte Saugquelle angeschlossen, die mit der Steuerung 300 in Wirkverbindung steht und von dieser aktiviert bzw. deaktiviert und ausserdem in ihrer Wirkung umgekehrt werden kann. Bei aktivierter Saugquelle wird das über der Saugeinrichtung 460 befindliche Ende des Aufzeichnungsmediums M aufgrund der Saugwirkung auf dem Mantel 110 der Spanntrommel 100 festgehalten, bei deaktivierter Saugquelle wird das Aufzeichnungsmedium freigegeben. Bei umgekehrter Wirkung wird das Ende des Aufzeichnungsmediums M aufgrund der Blaswirkung aktiv vom Mantel 110 abgehoben.

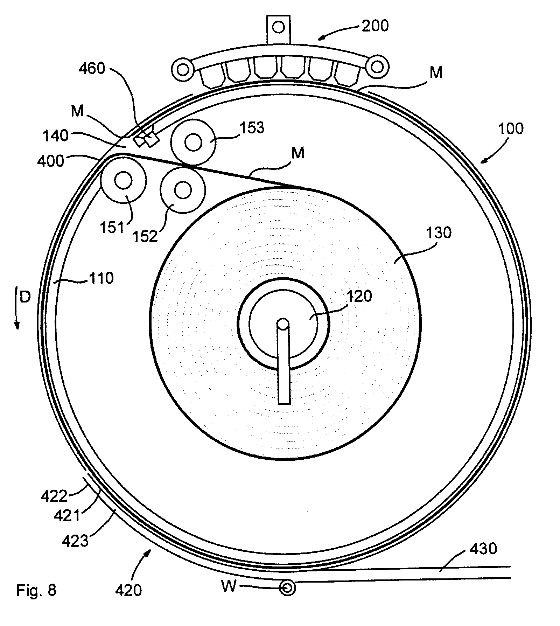

Im Bereich der Aufzeichnungseinheit 200 ist der Führungsmantel 400 mit einem Schiebefenster 410 versehen, welches mittels eines nicht dargestellten Antriebs parallel zur Rotationsachse der Spanntrommel 100 zwischen einer Offen-Stellung und einer Geschlossen-Stellung hin und her verschiebbar ist. In der Offen-Stellung (Figuren 6 und 8) haben die Aufzeichnungsköpfe der Aufzeichnungseinheit 200 Zugriff auf das darunterliegende Aufzeichnungsmedium M, in der Geschlossen-Stellung bildet das Schiebefenster 410 wie der Rest des Führungsmantels 400 eine Führungsfläche für das Aufzeichnungsmedium M.

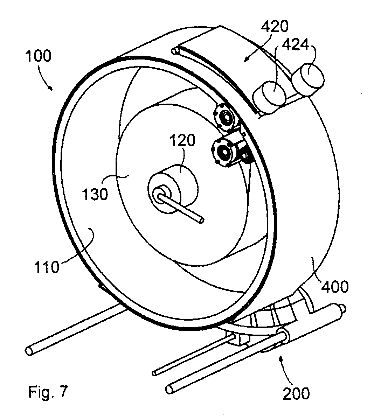

Etwa diagonal gegenüber dem Schiebefenster 410 ist im Führungsmantel 400 eine Weiche 420 eingesetzt (Fig.7). Diese besteht im wesentlichen aus zwei koaxialen, im wesentlichen zylindrisch gekrümmten Leitflächen 421 und 422, welche zwischen sich einen Weichenkanal 423 bilden. Die beiden Leitflächen 421 und 422 und damit die gesamte Weiche 420 sind an ihren hinteren Enden um eine feststehende, zur Rotationsachse der Spanntrommel parallele Achse W schwenkbar gelagert, so dass ihre vorderen Enden radial einwärts bzw. auswärts geschwenkt werden können. Für diese Schwenkbewegung der Weiche 420 ist ein durch zwei Organe 424 symbolisch angedeuteter Weichenantrieb vorgesehen, welcher mit der Steuerung 300 zusammenwirkt. Am hinteren Ende der Weiche 420 mündet der Weichenkanal 423 in einen sich an die Weiche 420 anschliessenden, feststehenden Ableitkanal 430 ein (Figuren 8-12).

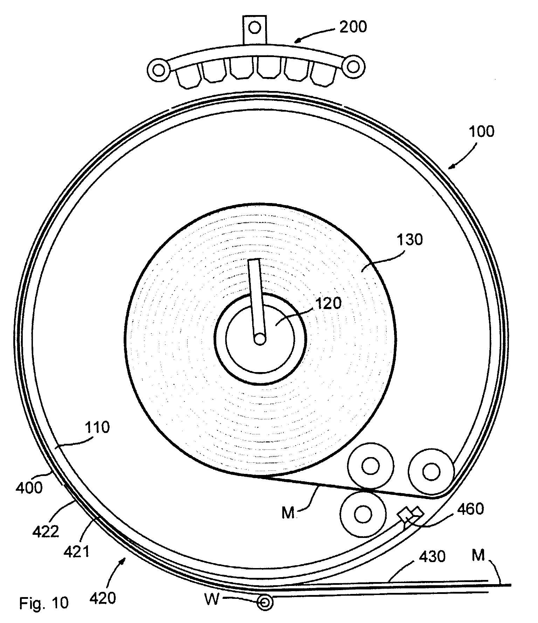

In der radial äusseren Normalstellung der Weiche 420 fluchtet ihre innere Leitfläche 421 mit dem Führungsmantel 400 (Fig.8), in der radial inneren Entladestellung liegt die innere Leitfläche 421 praktisch am Mantel 110 der Spanntrommel 100 auf und die äussere Leitfläche 422 fluchtet an ihrem freien vorderen Ende im wesentlichen mit dem Führungsmantel 400 (Fig.10).

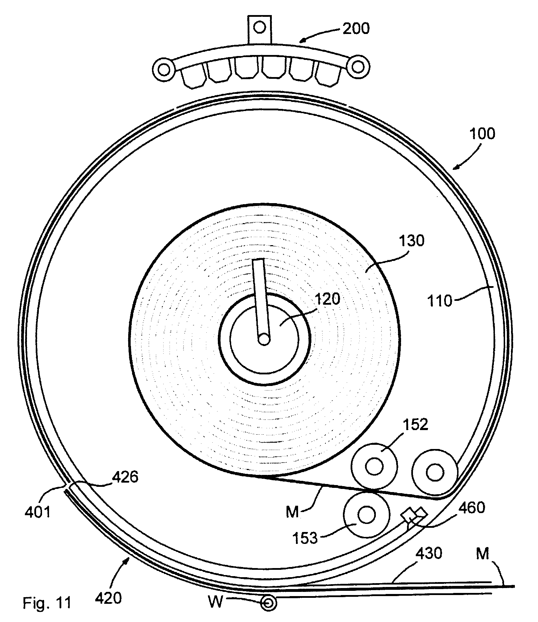

Das freie, vordere Ende 426 der inneren Leitfläche 421 der Weiche 420 ist ferner in an sich bekannter Weise als Schneidmesser ausgebildet, welches mit der gegenüberliegenden Kante 401 des Führungsmantels 400 zusammenwirkt und mit dieser zusammen eine Schneideinrichtung für das Aufzeichnungsmedium M bildet (Fig.11).

Die Funktionsweise dieser Variante der Aufzeichnungsvorrichtung ist wie folgt:

Nachdem eine Vorratsrolle 130 von Aufzeichnungsmedium M auf dem Spanndorn 120 im Inneren der Spanntrommel 100 befestigt ist, wird der Anfang des bahnförmigen Aufzeichnungsmediums M zwischen den Klemmrollenpaar 152-153 durch den Schlitz 140 nach aussen geführt, um den Mantel 110 der Spanntrommel 100 herum geführt und mittels der Saugeinrichtung 460 festgelegt. Gleichzeitig oder anschliessend wird das Schiebefenster 410 in die Offen-Stellung (Fig.6) gebracht und die Weiche 420 in ihre Normalstellung (Fig.8) geschwenkt. Damit ist das Aufzeichnungsmedium M auf der Spanntrommel 100 befestigt und die Vorrichtung für den Aufzeichnungsvorgang bereit.

Nun wird die Spanntrommel 100 mitsamt dem Aufzeichnungsmedium M in Rotation in Richtung des Pfeils D versetzt und die aufzuzeichnende Bildinformation wird mittels der Aufzeichnungseinheit 200 auf den auf dem Mantel 110 befindlichen Abschnitt des Aufzeichnungsmediums M oder einen Teil desselben in an sich bekannter Weise aufgezeichnet (Fig.8).

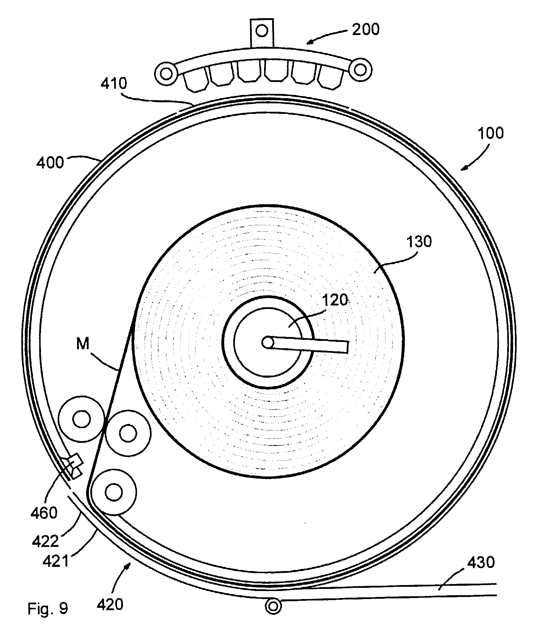

Wenn der Aufzeichnungsvorgang beendet ist, wird die Aufzeichnungseinheit 200 aixial in eine Parkposition verschoben und das Schiebefenster 410 wird wieder geschlossen (Fig.9). Die Spanntrommel 100 dreht sich mit konstanter Geschwindigkeit weiter.

Wenn sich die Spanntrommel 100 eine Drehstellung einnimmt, in der sich die Saugeinrichtung 460 knapp vor der Weiche 420 befindet Fig.9), wird die Weiche 420 in ihre innere Entladestellung geschwenkt und die Saugeinrichtung 460 deaktiviert bzw. in ihrer Wirkung umgekehrt. Dadurch wird der Anfangsabschnitt des Aufzeichnungsmediums M vom Mantel 110 der Spanntrommel 100 abgehoben und in den Weichenkanal 423 hineingeführt. Die Weiche 420 leitet dann bei der weiteren Drehung der Spanntrommel 100 das Aufzeichnungsmedium M in den Ableitkanal 430. Das Aufzeichnungsmedium M wird also - bildlich gesprochen - gewissermassen von der Spanntrommel 100 "abgeschält" (Fig.10).

Nachdem der bildtragende Teil des Aufzeichnungsmediums M von der Spanntrommel 100 abgelöst wurde, wird die Weiche 420 in ihre äussere Normalstellung zurückgeschwenkt. Dabei trennt das als Schneideinrichtung ausgebildete vordere freie Ende der inneren Leitfläche 421 der Weiche 420 den bildtragenden Abschnitt vom restlichen, noch auf der Spanntrommel befindlichen Aufzeichnungsmedium ab (Fig.11). Der bildtragende Abschnitt wird über den Ableitkanal 430 einer externen, hier nicht dargestellten Einrichtung zur weiteren Bearbeitung, beispielsweise Auftrennung in Einzelbilder, zugeführt.

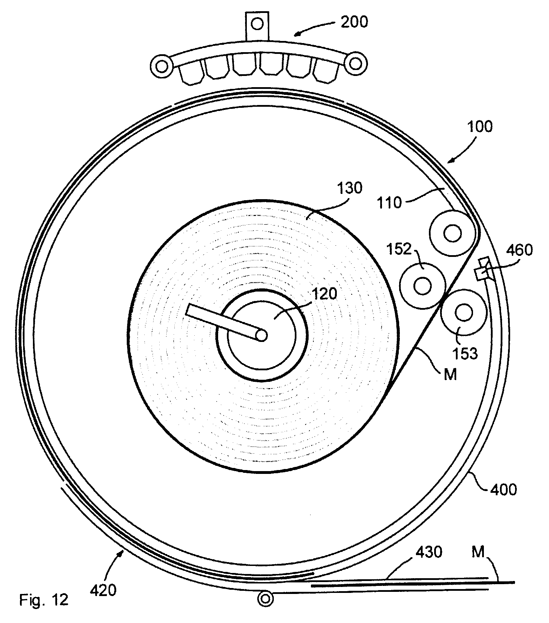

Nun wird mittels der durch einen nicht gezeigten Antriebsmotor angetriebenen Klemmrollen 152 und 153 Aufzeichnungsmedium M vom Vorratswickel 130 abgezogen (Fig.12) und soweit nachgeschoben, bis das vordere Ende in den Eingriffsbereich der Saugeinrichtung 460 gelangt. Daraufhin wird diese wieder aktiviert und somit das Aufzeichnungsmedium M auf der Spanntrommel fixiert. Die Vorrichtung steht nun wieder für den nächsten Aufzeichnungsvorgang bereit (Fig.8).

## Patentansprüche

1. Vorrichtung zum Aufzeichnen von Bildinformation auf ein flächiges Aufzeichnungsmedium, mit einer drehbar angetriebenen Spanntrommel (100), Mitteln (160) zum Befestigen des Aufzeichnungsmediums (M) auf dem Mantel (110) der Spanntrommel und mit einer bezüglich der Drehrichtung der Spanntrommel feststehenden Aufzeichnungseinheit (200), welche ihr in Form von elektrischen Signalen zugeführte Bildinformation auf das auf dem Mantel der rotierenden Spanntrommel (100) befestigte Aufzeichnungsmedium (M) aufzeichnet, dadurch gekennzeichnet, dass im Inneren der Spanntrommel (100) Halterungsmittel (120) für einen zu einer Rolle (130) aufgewickelten Vorrat an Aufzeichnungsmedium (M) vorgesehen sind und dass die Spanntrommel (100) in ihrem Mantel (110) einen Schlitz (140) aufweist, durch den das Aufzeichnungsmedium (M) vom Inneren der Spanntrommel (100) auf deren Mantel (110) geführt werden kann.

2. Vorrichtung nach Anspruch 1, dadurch gekennzeichnet, dass die Befestigungsmittel eine in Drehrichtung der Spanntrommel (100) unmittelbar hinter dem Schlitz (140) angeordnete lösbare Klemmeinrichtung (160) umfassen.

3. Vorrichtung nach einem der vorangehenden Ansprüche, dadurch gekennzeichnet, dass an der Spanntrommel (100) im Bereich des Schlitzes (140) eine Schneideinrichtung (170) für das Aufzeichnungsmedium (M) vorgesehen ist.

4. Vorrichtung nach den Ansprüchen 2 und 3, dadurch gekennzeichnet, dass eine bezüglich der Drehrichtung der Spanntrommel (100) ortsfeste Betätigungseinrichtung (180) vorgesehen ist, welche in einer definierten Drehstellung der Spanntrommel (100) mit der Klemmeinrichtung (160) und der Schneideinrichtung (170) in Eingriff bringbar ist, um die Klemmeinrichtung (160) zu lösen bzw. zu schliessen und die Schneideinrichtung (170) zu betätigen.

5. Vorrichtung nach einem der vorangehenden Ansprüche, dadurch gekennzeichnet, dass eine bezüglich der Drehrichtung der Spanntrommel (100) ortsfeste Antriebseinrichtung (190) vorgesehen ist, welche in einer definierten Drehstellung der Spanntrommel (100) mit dem auf dem Mantel (110) der Spanntrommel befestigten Aufzeichnungsmedium (M) in Eingriff bringbar ist, um dieses in Drehrichtung der Spanntrommel relativ zu dieser vorzuschieben.

6. Vorrichtung nach Anspruch 1, dadurch gekennzeichnet, dass Mittel (400,420) vorgesehen sind, um einen bildtragenden Abschnitt des Aufzeichnungsmediums (M) bei rotierender Spanntrommel (100) von dieser wegzuführen.

7. Vorrichtung nach Anspruch 1, dadurch gekennzeichnet, dass die Spanntrommel (100) von einem feststehenden Führungsmantel (400) koaxial umschlossen ist, der mit einer zwischen einer Normalstellung und einer Entladestellung hin und her schwenkbaren Weiche (420) versehen ist, welche in der Entladestellung einen bildtragenden Abschnitt des Aufzeichnungsmediums (M) von der Spanntrommel (100) weglenkt.

8. Vorrichtung nach Anspruch 7, dadurch gekennzeichnet, dass die Weiche (420) an ihrem freien Ende (426) als Schneideinrichtung ausgebildet ist.

9. Vorrichtung nach Anspruch 7 oder 8, dadurch gekennzeichnet, dass der Führungsmantel (400) im Bereich der Aufzeichnungseinheit (200) mit einem öffen- und schliessbaren Fenster (410) versehen ist.

10. Vorrichtung nach einem der Ansprüche 6-9, dadurch gekennzeichnet, dass die Befestigungsmittel eine in Drehrichtung der Spanntrommel (100) unmittelbar hinter dem Schlitz (140) angeordnete, vorzugsweise in ihrer Wirkung umkehrbare Saugeinrichtung (460) umfassen.
